# FASCICULE DE BREVET EUROPEEN

(11) **EP 2 096 930 B1**
(45) Date de publication et mention de la délivrance du brevet: **05.01.2011**
(21) Numéro de dépôt: 07871869.9
(22) Date de dépôt: 14.12.2007
(51) Int. Cl.: A23C 9/137, A23L 1/053

(54) **PRODUITS FERMENTES A BASE DE FIBRES ALIMENTAIRES ET LEURS PROCEDES DE PREPARATION**
FERMENTIERTE PRODUKTE MIT BALLASTSTOFFEN UND VERFAHREN ZU IHRER HERSTELLUNG
FERMENTED PRODUCTS CONTAINING DIETARY FIBERS AND METHODS FOR PREPARING THE SAME

(30) Priorité: 20.12.2006 FR 0611132
(43) Date de publication de la demande: 09.09.2009
(73) Titulaire: Compagnie Gervais Danone, 75009 Paris (FR)
(72) Inventeur: NOBLE, Olivier, F-91400 Orsay (FR); LYOTHIER, Arnaud, F-92600 Asnières Sur Seine (FR)
(74) Mandataire: Grosset-Fournier, Chantal Catherine
(86) Numéro de dépôt international: PCT/FR2007/002078
(87) Numéro de publication internationale: WO 2008/087304

(56) Documents cités:
- EP-A- 1 142 482
- WO-A2-2008/040872
- WO-A2-2008/040872
- FR-A1- 2 815 824
- US-A- 4 797 289
- US-A- 4 971 810
- US-A1- 2006 251 633
- ANONYMOUS: "FROM A TEXTURISER TO A FIBRE" FOOD INGREDIENTS AND ANALYSIS INTERNATIONAL, LONDON, GB, janvier 1998 (1998-01), page 56, XP001009938

## Description

La présente invention concerne des produits fermentés à base de fibres alimentaires et leurs procédés de préparation.

Les fibres alimentaires sont des substances d'origine végétale, indigestibles (résistantes aux enzymes digestifs de l'homme), et indispensables au bon fonctionnement du transit intestinal. Ces substances sont classées en deux catégories en fonction de leur solubilité dans l'eau. Les fibres solubles sont la pectine, les gommes et les mucilages et les fibres insolubles sont notamment la cellulose, l'hémicellulose et la lignine.

La gomme *d'acacia* est une fibre alimentaire soluble naturelle. Il s'agit d'un polysaccharide ramifié à haut poids moléculaire (supérieur à 100 000 Da) et compact (volume hydrodynamique faible).

La gomme *d'acacia,* également connue sous le nom de gomme arabique, est un exsudat d'acacia, purifié uniquement par un procédé physique bien connu de l'homme du métier, comportant les étapes de broyage, dissolution dans l'eau, filtration, centrifugation, microfiltration puis séchage par atomisation ou granulation.

Il existe deux types de gommes d'*acacia;* la gomme d'*acacia seyal* et la gomme d'*acacia senegal.* Elles ont une structure faiblement différente. Elles peuvent toutefois être différenciées par un pouvoir rotatoire très différent et par leur composition en sucres simples (46% d'arabinose dans la gomme d'*acacia seyal* et 24 % dans la gomme d'*acacia senegal*).

La gomme d'*acacia,* outre son utilisation comme source de fibres, est couramment utilisée dans l'industrie agroalimentaire en tant que stabilisant ou en tant qu'agent viscosifiant; elle est donc présente notamment dans certaines confiseries, et dans certaines boissons.

Il est important de noter que la gomme d'*acacia* possède une structure ramifiée assez compacte, d'où un développement de la viscosité beaucoup moins important que pour des fibres à chaînes linéaires telles que la pectine ou le guar.

Dans les pays occidentaux, la consommation quotidienne de fibres alimentaires est insuffisante. La consommation quotidienne moyenne est de 10 à 15 g alors que la recommandation nutritionnelle est de 25 à 30 g.

Or, de nombreuses études épidémiologiques, et plus récemment des données cliniques, ont permis de mettre en évidence le rôle primordial des fibres alimentaires dans le bon fonctionnement du système digestif et la prévention de nombreuses pathologies chroniques, notamment le diabète, les maladies cardio-vasculaires, l'obésité et certains cancers (Macfarlane S. et coll. ; Aliment Pharmacol Ther, 2006, 24: 701-714 ou Cherbut C. ; 2003, cahiers de nutrition et de diététique, 38: 346-354 ou Cummings JH. et coll. ; 2002, British Journal of Nutrition, Suppl 2, 87: S145-S151).

L'incorporation de fibres dans des produits alimentaires de consommation quotidienne est un bon moyen d'augmenter la consommation en fibres.

Dans le cas de la fabrication d'un produit fermenté à base de lait ou à base de soja contenant des fibres, l'incorporation d'une certaine dose de fibres dans le produit se heurte d'une part, à un problème de viscosité lié aux propriétés viscosifiantes des fibres et d'autre part à une incompatibilité de certaines fibres solubles (polysaccharides) avec les protéines laitières (caséines, protéines sériques) ou les protéines de soja provoquant la perturbation de la formation du gel lactique et entraînant une séparation de la phase contenant les protéines de celle contenant la gomme, aboutissant à l'obtention d'un produit non commercialisable.

La demande américaine US 4,971,810 concerne une méthode de fabrication de yoghourts comprenant comme source de fibres, de la gomme arabique (2 g à 6 g de fibres pour 226,8 g de produit final).

La méthode d'incorporation des fibres dans la composition laitière est une méthode standard utilisée au niveau industriel notamment pour incorporer de l'amidon et de la gélatine, et dans laquelle la gomme et le lait sont mélangés avant l'étape de fermentation.

Cette méthode ne résout pas le problème technique lié à l'incompatibilité des fibres avec les protéines laitières puisque la teneur en fibres a été limitée afin que l'incorporation des fibres dans le produit laitier ne se heurte à aucune difficulté ni technique, ni organoleptique.

La demande EP 1 532 864 traite d'un produit laitier maigre de type beurre allégé ou margarine allégée, contenant de la gomme arabique.

Les produits ciblés sont des produits allégés en matières grasses ayant une structure macroscopique caractéristique d'une émulsion. Cette structure est très différente de la structure macroscopique des produits laitiers fermentés, qui est celle d'une solution colloïdale.

A ce jour, l'art antérieur ne fournit pas de solution satisfaisante au problème de l'incorporation des fibres dans une composition à base de lait ou à base de soja, plus particulièrement au problème de l'incompatibilité des fibres avec les protéines laitières ou les protéines de soja.

L'invention a principalement pour but de fournir des produits fermentés contenant des fibres alimentaires et ayant des propriétés organoleptiques acceptables (texture, viscosité, goût).

L'invention a également pour but de fournir un nouveau produit fermenté contenant des fibres alimentaires et présentant un effet prébiotique.

Un autre but de l'invention est de fournir des procédés de préparation permettant d'obtenir les produits ci-dessus.

La présente invention concerne l'utilisation de gomme *d'acacia,* notamment *acacia senegal*, pour la préparation d'un produit fermenté stable à base de lait ou à base de soja, ladite gomme étant utilisée à une concentration d'environ 3 à environ 10 %, en particulier d'environ 5 à environ 9 % en poids, par rapport au poids total du produit fermenté contenant la gomme *d'acacia* et étant ajoutée après la fermentation dudit produit

On entend par « produit fermenté à base de lait » un produit constitué majoritairement de lait, pouvant éventuellement contenir du soja et ayant subi une étape de fermentation. La dénomination « lait fermenté » (décret n°88-1203 du 30 décembre 1988) est réservée à un produit laitier préparé avec des laits écrémés ou non, ou des laits concentrés ou en poudre, ayant subi un traitement thermique au moins équivalent à la pasteurisation, et ensemencé avec des micro-organismes producteurs d'acide lactique tels que les lactobacilles (*Lactobacillus acidophilus, Lb. casei, Lb. plantarum, Lb. reuteri, Lb. johnsonii*), certains streptocoques *(Streptococcus thermophilus*) les bifidobactéries (*Bifidobacterium bifidum, B. longum, B. breve, B. animalis*) et les lactocoques (*Lactococcus lactis*). L'expression « produit constitué majoritairement de lait » correspond à un produit constitué d'au moins 50 % de lait, en particulier de 70 à 100 % de lait.

On entend par « produit fermenté à base de soja » un produit constitué majoritairement de soja, pouvant éventuellement contenir du lait et ayant subi une étape de fermentation. L'expression « produit constitué majoritairement de soja » correspond à un produit constitué d'au moins 50 % de soja, en particulier de 70 à 100 % de soja.

On entend par « gomme d'*acacia senegal*» une gomme produite à partir d'exsudats naturels ou provoqués par l'incision de tiges ou branches d'arbres du genre Acacia Sénégal.

La gomme d'*acacia senegal* est une gomme de choix. Sa faible viscosité permet de l'utiliser à forte concentration.

Il a été constaté de manière inattendue que l'utilisation de gomme d'*acacia senegal* selon l'invention, permet d'obtenir un produit stable et satisfaisant du point de vue organoleptique.

On entend par « stable », un produit dont l'intégrité est conservée pendant au moins 28 jours à 10°C, c'est-à-dire que le produit ne présente pas de séparation de phase.

Les produits de l'invention sont stables lors d'une conservation pendant 28 jours à 10°C et ne présentent pas de faux goûts décelables par un test standard d'analyse sensorielle.

Cette analyse a été réalisée sur un mini-jury de 6 personnes. Les consommateurs Constituant le panel sont sélectionnés pour leurs capacités sensorielles, et sont non entraînés. Un yoghourt brassé standard a été utilisé comme témoin.

Les membres du panel utilisent une grille de dégustation permettant, de noter individuellement des observations qualitatives sur les items suivants : aspect visuel du yoghourt, texture perçue à la cuillère, texture perçue en bouche, saveurs et arômes.

Une discussion est ensuite menée pour parvenir à un consensus entre les membres du panel, pour chaque produit dégusté.

A l'issu de cette analyse, un produit est considéré comme à « propriétés organoleptiques acceptables » si les membres du panel n'ont pas détecté de faux goûts de type « terre » ou « poussière » dans ce produit.

Des essais comparatifs réalisés avec la gomme d'*acacia* la plus classique (*Acacia seyal*) dans les mêmes conditions que la présente invention, ont montré que les produits obtenus possèdent un faux goût clairement identifiable, décrit par les dégustateurs et ne sont pas stables; une phase liquide séparée se développe au fond du pot, lorsque l'on s'approche de la DLC (date limite de consommation), manifestant une séparation de la phase contenant les protéines de celle contenant la gomme.

Dans la présente invention, si la gomme d'*acacia senegal* est utilisée à une concentration inférieure à 3 % en poids, par rapport au poids total du produit fermenté contenant la gomme d'*acacia,* le produit obtenu ne présente pas une source de fibres alimentaires suffisante pour répondre aux recommandations nutritionnelles et pour avoir un effet prébiotique qui se mesure en quantité totale consommée quotidiennement. Par « effet prébiotique », on entend l'effet des fibres sur la croissance et/ou l'activité de certaines bactéries déjà établies dans le colon conduisant à un effet bénéfique sur la santé du consommateur.

Si la gomme d'*acacia senegal* est utilisée à une concentration supérieure à 10 % en poids, par rapport au poids total du produit fermenté contenant la gomme d'*acacia,* le produit présente généralement une séparation de phase et des faux goûts.

Il est important de noter que la concentration .en gomme d'*acacia* utilisée selon l'invention concerne la gomme d'*acacia* spécialement ajoutée lors de la préparation des produits. Cette concentration ne tient pas compte de l'éventuelle présence de fibres naturelles contenues dans les fruits ajoutés lors de la préparation d'un produit aux fruits de type brassé aux fruits ou des fibres présentes dans le soja.

L'invention concerne également un produit fermenté stable à base de lait ou à base de soja, susceptible d'être obtenu par le procédé de l'invention, contenant de la gomme *d'acacia,* notamment *acacia senegal,* à une concentration d'environ 3 à environ 10 %, en particulier d'environ 5 à environ 9 % en poids, par rapport au poids total du produit fermenté contenant la gomme *d'acacia.*

En particulier, ledit produit s'il est conditionné en pot de 125g contient d'environ 6g à environ 12g de gomme d'*acacia* par unité de conditionnement, ce qui représente 20 à 50% de l'apport quotidien recommandé en fibres. Un effet prébiotique pourra être obtenu à une dose supérieure à 10g de gomme d'*acacia.*

Selon un mode de réalisation avantageux, l'invention concerne un produit fermenté stable à base de lait ou à base de soja, susceptible d'être obtenu par le procédé de l'invention, contenant de la gomme *d'acacia,* notamment *acacia senegal,* tel que défini ci-dessus, se présentant sous la forme d'un produit à base de lait fermenté brassé ou brassé aux fruits ou brassé à boire ou brassé allégé ou d'un produit fermenté à base de lait et contenant du soja, ou d'un produit fermenté à base de soja.

On entend par «produit fermenté à base de lait et contenant du soja », un produit constitué majoritairement de lait et contenant également du soja, et ayant subi une étape de fermentation.

De façon avantageuse, le produit tel que défini ci-dessus présente une viscosité inférieure à 2000 mPa.s, notamment inférieure à 1500 mPa.s, encore plus préférentiellement inférieure à 600 mPa.s, ladite viscosité étant notamment mesurée à une température de 10°C et à un cisaillement de 64 s⁻¹.

La viscosité a été mesurée avec un viscosimètre Rhéomat 180 de la société Rheometric Scientific.

Dans le cas précis d'un produit laitier fermenté brassé à boire selon l'invention, la viscosité est comprise entre 150 et 200 mPa.s.

Des mesures comparatives de la viscosité ont été réalisées à 15 jours sur un produit témoin (type yoghourt Activia brassé nature) et un produit test (contenant 8 % de gomme d'*acacia senegal*). La viscosité mesurée est respectivement de 620 mPa.s et 610 mPa.s.

Les produits de l'invention contenant de la gomme d'*acacia senegal* ont une viscosité proche des produits standard actuellement dans le commerce.

Des essais comparatifs réalisés avec 6 % de gomme de guar hydrolysée dans les mêmes conditions que la présente invention, ont révélé des produits brassés jugés trop épais et collant en bouche, inacceptables au niveau organoleptique. La viscosité était alors d'environ 1500 mPa.s.

Il faut cependant souligner que la mesure de viscosité ne permet pas de décrire la texture en bouche qu'aura un produit donné. Cette évaluation de la texture (épaisseur, collant en bouche...) se fait par un panel d'expert en analyse sensorielle connaissant le type de produit visé. Ce type d'évaluation est très bien connu de l'homme du métier.

Selon un mode de réalisation avantageux, le produit tel que défini ci-dessus est tel que le taux de matière grasse est d'environ 0 à environ 8 %, en particulier d'environ 3 à environ 5 %, plus particulièrement d'environ 3,2 % en poids, par rapport au poids total du produit fermenté contenant la gomme *d'acacia.*

Par « matière grasse » (MG) on entend les corps gras (graisses, huiles) contenus dans les aliments. Le taux de matière grasse est mesuré par rapport au poids du produit fini.

Selon un autre mode de réalisation avantageux, le produit tel que défini ci-dessus est tel que le taux de phase liquide séparée est inférieur à environ 5 %, plus particulièrement inférieur à environ 3 %, encore plus particulièrement inférieur à environ 1 % en poids, par rapport au poids total du produit.

On entend par « phase liquide séparée », la phase transparente apparaissant au fond du pot en approchant de la date limite de consommation après 20 à 25 jours de stockage du produit.

Le « taux de phase liquide séparée » correspond à la quantité de liquide présente en fin de DLC (dates limites de consommation) au fond du pot.

Ce « taux de phase liquide séparée » est très facilement mesuré par un homme du métier en utilisant par exemple, un récipient transparent et en mesurant la hauteur de la phase transparente apparaissant au fond du pot au cours du stockage de ce produit puis en divisant cette hauteur par la hauteur totale du produit.

Un produit ayant un taux de phase liquide séparée inférieur à 5% est considéré comme un produit stable puisqu'il n'y a pratiquement pas de séparation de phase.

L'invention concerne également un procédé de préparation d'un produit fermenté stable à base de lait ou à base de soja, contenant de la gomme *d'acacia,* notamment *acacia senegal,* ledit procédé comprenant une étape d'incorporation dans un produit fermenté à base de lait ou à base de soja, de 10 à 30 % en poids d'une solution aqueuse concentrée de gomme *d'acacia senegal,* par rapport au poids total du produit fermenté contenant la gomme *d'acacia;* ladite solution aqueuse concentrée de gomme *d'acacia senegal* contenant d'environ 30 à environ 50 % de gomme *d'acacia* par rapport au poids total de la solution ;
ledit produit fermenté à base de lait ou à base de soja étant obtenu par une fermentation d'un produit initial à base de lait ou à base de soja, ledit produit initial à base de lait ou à base de soja étant préalablement ensemencé par des ferments.

Il a été constaté de manière inattendue que l'incorporation de la gomme *d'acacia,* après la fermentation permet de s'affranchir du problème d'incompatibilité des fibres avec les protéines laitières ou les protéines de soja et permet d'obtenir un produit homogène et stable.

L'expression « produit initial à base de lait » correspond à un produit laitier servant de base à l'ensemencement par des ferments. En général, dans le cas de la fabrication d'un produit fermenté à base de lait, le produit initial à base de lait est préalablement standardisé en matière grasse, enrichi en protéines, homogénéisé puis soumis à un traitement thermique.

L'expression « produit initial à base de soja » désigne un produit de départ à base de soja n'ayant pas subi de fermentation.

L'incorporation de la gomme *d'acacia* après la fermentation a comme autre avantage de permettre à l'industriel de disposer d'une seule masse blanche initiale à partir de laquelle différents produits peuvent être obtenus par ajout de préparations différentes.

Selon un mode de réalisation avantageux, le procédé tel que défini ci-dessus comprend une étape supplémentaire d'incorporation d'une partie de la gomme d'*acacia senegal* sous forme de poudre dans le produit initial à base de lait ou à base de soja, cette étape d'incorporation ayant lieu avant la fermentation, la partie de la gomme *d'acacia* incorporée avant la fermentation représentant au plus 1,5 % du poids total du produit fermenté contenant la gomme *d'acacia.*

La gomme d'*acacia senegal* sous forme de poudre peut être l'ingrédient Fibregum B (société CNI).

Il a été montré que l'incorporation avant la fermentation d'une quantité de gomme supérieure à 1,5 % du poids total du produit fermenté entraîne inexorablement la formation d'un gel lactique de mauvaise qualité dû à l'incompatibilité entre la gomme et les protéines de lait. Par ce procédé direct d'incorporation, une quantité maximale de 1,75 g de gomme d'*acacia* pour un pot de 125 g peut être incorporée.

Un gel lactique de mauvaise qualité est caractérisé par une agrégation des protéines laitières puis une ségrégation des protéines et des fibres et enfin un déphasage macroscopique dans le produit.

Avantageusement, dans le procédé tel que défini ci-dessus, la solution aqueuse concentrée de gomme *d'acacia senegal* présente une teneur en gomme *d'acacia senegal* d'environ 30 à environ 50 %, plus particulièrement d'environ 40 à environ 50 %, et notamment d'environ 42 à environ 47 %, et encore plus particulièrement d'environ 45% par rapport au poids total de la susdite solution aqueuse concentrée.

Particulièrement, la solution aqueuse concentrée de gomme *d'acacia senegal* présente une viscosité de 2300 mPa.s à 20°C.

Selon un mode de réalisation avantageux, dans le procédé tel que défini ci-dessus, la solution aqueuse concentrée de gomme *d'acacia senegal* est préparée par mélange de gomme *d'acacia* dans un milieu aqueux, choisi notamment parmi l'eau, les jus de fruits, les jus végétaux, suivi d'un traitement destiné à l'élimination des contaminants bactériologiques, notamment un traitement thermique par chauffage à environ 95 °C pendant 5 à 10 minutes.

Le mélange du milieu aqueux et de la gomme *d'acacia* se fait en utilisant un mélangeur statique ou dynamique.

Selon un autre mode de réalisation avantageux, le procédé selon l'invention tel que défini ci-dessus comprend :
- une étape de préparation d'un produit fermenté à base de lait ou à base de soja, obtenu par une fermentation d'un produit initial à base de lait ou à base de soja, ledit produit initial à base de lait ou à base de soja étant préalablement ensemencé par des ferments,
- une étape d'incorporation, dans le produit fermenté à base de lait ou à base de soja obtenu précédemment, de 10 à 30 % en poids d'une solution aqueuse concentrée de gomme *d'acacia senegal,* par rapport au poids total du produit fermenté contenant la gomme *d'acacia;*
ladite solution aqueuse concentrée de gomme *d'acacia senegal* contenant d'environ 30 à environ 50 % de gomme *d'acacia* par rapport au poids total de la solution et étant obtenue par mélange de gomme *d'acacia* dans un milieu aqueux, choisi notamment parmi l'eau, les jus de fruits, les jus végétaux, suivi d'un traitement destiné à l'élimination des contaminants bactériologiques, notamment un traitement thermique, de ladite solution aqueuse concentrée.

L'étape d'incorporation de la solution aqueuse concentrée de gomme *d'acacia senegal* dans le produit fermenté à base de lait ou à base de soja est réalisée par un mélangeur statique ou dynamique.

Selon un autre mode de réalisation avantageux, le procédé selon l'invention tel que défini ci-dessus comprend :
- une étape de préparation d'une solution aqueuse concentrée de gomme *d'acacia senegal* par mélange de gomme *d'acacia* dans un milieu aqueux, choisi notamment parmi l'eau, les jus de fruits, les jus végétaux, suivi d'un traitement thermique de ladite solution aqueuse concentrée par chauffage à environ 95 °C pendant 5 à 10 minutes, ladite solution ayant une teneur en gomme *d*'*acacia senegal* d'environ 30 à environ 50 %, plus particulièrement d'environ 40 à environ 50 %, et notamment d'environ 42 à environ 47 %, et encore plus particulièrement d'environ 45 % par rapport au poids total de la sus dite solution aqueuse concentrée,
- une étape de préparation d'un produit fermenté à base de lait ou à base de soja, obtenu par une fermentation d'un produit initial à base de lait ou à base de soja, ledit produit initial à base de lait ou à base de soja, étant préalablement ensemencé par des ferments, composés notamment d'une ou plusieurs souches de *Streptococcus spp.,* de *Lactobacillus spp.,* préférentiellement *L. bulgaricus, L. acidophilus, L. reuteri, L. plantarum* et *L. casei,* de *Lactococcus spp.,* préférentiellement *L. lactis subsp. cremoris* et de *Bifidobacterium spp.,* préférentiellement *B. animalis ssp lactis, B. longum* et *B. breve* ;
l'ordre des étapes respectives de préparation de la solution aqueuse concentrée de gomme *d'acacia* et de préparation du produit fermenté à base de lait ou à base de soja, étant indifférente, et
- une étape d'incorporation dans le produit fermenté à base de lait ou à base de soja obtenu précédemment, de 10 à 30 % en poids de ladite solution aqueuse concentrée de gomme *d'acacia senegal,* par rapport au poids total du produit fermenté contenant la gomme *d'acacia.*

Selon un autre mode de réalisation, le procédé selon l'invention tel que défini ci-dessus comprend :
- une étape de préparation d'une solution aqueuse concentrée de gomme *d'acacia senegal* par mélange de gomme *d'acacia* dans un milieu aqueux, choisi notamment parmi l'eau, les jus de fruits, les jus végétaux, suivi d'un traitement thermique de ladite solution aqueuse concentrée par chauffage à environ 95 °C pendant 5 à 10 minutes, ladite solution ayant une teneur en gomme *d'acacia senegal* d'environ 30 à environ 50 %, plus particulièrement d'environ 40 à environ 50 %, et notamment d'environ 42 à environ 47 %, et encore plus particulièrement d'environ 45 % par rapport au poids total de la sus dite solution aqueuse concentrée,
- une étape de préparation d'un produit à base de lait ou à base de soja non fermenté contenant de la gomme *d'acacia,* par incorporation d'une partie de la gomme *d'acacia senegal* sous forme de poudre dans un produit initial à base de lait ou à base de soja, cette étape d'incorporation ayant lieu avant la fermentation du sus dit produit initial, la partie de la gomme *d'acacia* incorporée avant la fermentation représentant au plus 1,5 % du poids total du produit fermenté contenant la gomme *d'acacia ;*
- une étape de fermentation du produit obtenu à l'étape précédente, et
- une étape d'incorporation dans le produit fermenté à base de lait ou à base de soja obtenu précédemment, de 10 à 30 % en poids de ladite solution aqueuse concentrée de gomme *d'acacia senegal,* par rapport au poids total du produit fermenté contenant la gomme *d'acacia.*

L'invention concerne également un produit fermenté stable à base de lait ou à base de soja contenant de la gomme *d'acacia,* tel qu'obtenu par mise en oeuvre du procédé tel que défini ci-dessus.

L'invention concerne également un produit fermenté stable à base de lait ou à base de soja contenant de la gomme *d'acacia,* tel qu'obtenu par un procédé de préparation comprenant:
- une étape de préparation d'un produit fermenté à base de lait ou à base de soja, obtenu par une fermentation d'un produit initial à base de lait ou à base de soja, ledit produit initial à base de lait ou à base de soja étant préalablement ensemencé par des ferments,
- une étape d'incorporation, dans le produit fermenté à base de lait ou à base de soja obtenu précédemment, de 10 à 30 % en poids d'une solution aqueuse concentrée de gomme *d'acacia senegal,* par rapport au poids total du produit fermenté contenant la gomme *d'acacia ;*
ladite solution aqueuse concentrée de gomme *d'acacia senegal* contenant d'environ 30 à environ 50 % de gomme *d'acacia* par rapport au poids total de la solution et étant obtenue par mélange de gomme *d'acacia* dans un milieu aqueux, choisi notamment parmi l'eau, les jus de fruits, les jus végétaux, suivi d'un traitement destiné à l'élimination des contaminants bactériologiques, notamment un traitement thermique, de ladite solution aqueuse concentrée.

### EXEMPLES

### Exemple 1 : Procédé de préparation d'un produit stable à base de lait fermenté brassé contenant de la gomme d'acacia senegal.

### 1) Préparation du lait

Du lait écrémé ou demi écrémé (1,5 % de matières grasses (MG)) de la crème (40 % MG), de la poudre de lait écrémé (taux protéique de 30 %) et éventuellement du sucre sont mélangés afin de standardiser le lait en matières grasses et en protéines. Le produit sera formulé pour obtenir un taux protéique de 4,5%.

### 2) Traitement thermique et homogénéisation

Le lait est alors chauffé entre 85°C et 90°C pendant 15 à 30 minutes afin de détruire les micro-organismes pathogènes pouvant être présents et afin d'améliorer les propriétés physiques du yoghourt. Une fois la température atteinte, une homogénéisation est réalisée afin de casser les globules gras par des systèmes connus de l'homme du métier et sous une pression de 100 et 300 bars.

### 3) Refroidissement

Puis un refroidissement du lait, généralement à environ 40°C, est réalisé. Le lait refroidi à la température de fermentation est ensuite mis en cuve.

### 4) Ensemencement

Le lait est ensemencé par inoculation de ferments (*S. thermophilus* et *L. bulgaricus* entre 0,001 et 0,5 g/L) à la température de fermentation entre 36°C et 45°C et l'acidification est suivie jusqu'à un pH entre 4,6 et 4,7. La fermentation est arrêtée lorsque le pH atteint le pH cible. Un gel lactique (caillé) s'est alors formé du fait de cette fermentation.

### 5) Décaillage et lissage

Le décaillage est réalisé en brassant le gel lactique par pompage du gel. Ce décaillage pourra éventuellement être suivi par une étape de lissage (passage du gel au travers d'un filtre).

### 6) Mélange avec une solution aqueuse concentrée de gomme d'acacia

Dans un premier temps une solution aqueuse concentrée de gomme d'acacia senegal est préparée par mélange sous agitation de 45 % de gomme d'acacia dans 55 % d'un milieu aqueux, choisi notamment parmi l'eau, les jus de fruits, les jus végétaux. Puis un traitement thermique de la solution par chauffage à environ 95 °C pendant 5 à 10 minutes, est réalisé.

Ensuite, 20 % de la solution aqueuse concentrée de gomme d'*acacia senegal* est incorporée dans 80 % du produit laitier fermenté obtenu précédemment (par les étapes 1 à 5) grâce à un mélangeur statique ou dynamique.

### 7) Conditionnement

Le conditionnement se fait en pot de 125 g. Les produits sont stockés en chambre froide à 10°C.

Au bout de 28 jours de stockage, ces produits ne présentent pas de séparation de phase, ni de faux goûts décelables par un test standard d'analyse sensorielle.

### Exemple 2: Procédé de préparation d'un produit stable à base de lait fermenté brassé aux fruits contenant de la gomme d'acacia senegal

Le procédé de préparation d'un tel produit nécessite de réaliser les 5 premières étapes du procédé décrit dans l'exemple 1.

L'étape 6 correspond au mélange d'une solution concentrée aqueuse de gomme d'*acacia senegal* préparée comme dans l'exemple 1 avec une préparation de fruits (avec 50 % de morceaux de fruits) puis à l'incorporation de cette composition dans le produit laitier fermenté obtenu précédemment par les étapes 1 à 5 du procédé décrit dans l'exemple 1.

Au bout de 28 jours de stockage, ces produits ne présentent pas de séparation de phase, ni de faux goûts décelables par un test standard d'analyse sensorielle.

### Exemple 3: Procédé de préparation d'un produit stable à base de lait fermenté brassé à boire contenant de la gomme d'acacia senegal

Le procédé de préparation d'un produit fermenté laitier brassé à boire contenant de la gomme d'*acacia senegal* correspond au procédé décrit dans l'exemple 1, mis à part les différences suivantes :
- un taux protéique à 3 %,
- un lissage plus important, et
- une homogénéisation à l'étape 3).

Au bout de 28 jours de stockage, ces produits ne présentent pas de séparation de phase, ni de faux goûts décelables par un test standard d'analyse sensorielle.

### Exemple 4: Procédé de préparation d'un produit stable à base de lait fermenté brassé allégé (0 % de matières grasses) contenant de la gomme d'acacia senegal

Le procédé de préparation d'un produit fermenté laitier brassé allégé débute par une étape de préparation du lait par mélange de lait écrémé et de poudre de lait écrémé.

Les étapes suivantes de préparation (étapes 2 à 7) sont identiques à celles décrites dans l'exemple 1.

Au bout de 28 jours de stockage, ces produits ne présentent pas de séparation de phase, ni de faux goûts décelables par un test standard d'analyse sensorielle.

### Exemple 5: Procédé de préparation d'un produit stable fermenté à base de soja contenant de la gomme d'acacia senegal

La première étape de ce procédé consiste à mélanger du lait de soja (90 %) et éventuellement de l'amidon et du sucre.

Les étapes suivantes de préparation (étapes 2 à 7) sont identiques à celles décrites dans l'exemple 1.

Au bout de 28 jours de stockage, ces produits ne présentent pas de séparation de phase, ni de faux goûts décelables par un test standard d'analyse sensorielle.

### Exemple 6: Procédé de préparation d'un produit fermenté stable à base de lait contenant du soja et de la gomme d'acacia senegal

La première étape de ce procédé consiste à mélanger du lait écrémé ou demi écrémé (1,5 % de matières grasses (MG)), de la crème (40 % MG) et de la poudre de lait écrémé (taux protéique de 30 %) et des isolats de protéines de soja (dont le procédé de fabrication est bien connu de l'homme du métier) et éventuellement du sucre.

Les étapes suivantes de préparation (étapes 2 à 7) sont identiques à celles décrites dans l'exemple 1.

Au bout de 28 jours de stockage, ces produits ne présentent pas de séparation de phase, ni de faux goûts décelables par un test standard d'analyse sensorielle.

### Exemple 7: Essai comparatif Procédé de préparation de produits laitiers fermentés contenant de la gommes d'acacia senegal ajoutée avant la fermentation

Réalisation de produits laitiers fermentés contenant 1,5%, 2%, 3% et 5% de gomme d'*acacia.*

### • Formulation :

**Tableau I : Composition de la masse blanche**

| Taux Protéique (%) | Matière Grasse (%) | Carbohydrates (%) | Dont sucres ajoutés (%) |
|---|---|---|---|
| 4,2 | 3,9 | 11,1 | 4,8 |

Cinq produits ont été réalisés :
- Témoin sans acacia
- Masse blanche contenant 1,5% de gomme d'*acacia* en poids, par rapport au poids total du produit
- Masse blanche contenant 2,0% de gomme d'*acacia* en poids, par rapport au poids total du produit
- Masse blanche contenant 3,0% de gomme d'*acacia* en poids, par rapport au poids total du produit
- Masse blanche contenant 5,0% de gomme d'*acacia* en poids, par rapport au poids total du produit

La gomme d'*acacia* utilisée est l'ingrédient FIBREGUM P (fournisseur : CNI).

### • Process :

*Poudrage :* Dispersion des poudres à froid (PLE, Sucre et gomme d'*acacia*) dans une cuve agitée contenant du lait 0% et de la crème.

*Traitement thermique :* Le barème de traitement thermique appliqué est un barème standard du process yaourt brassé (95°C pendant 6 minutes).

*Fermentation :* Le ferment utilisé est une symbiose de streptococcus, lactobacillus et de bifidus (à un taux de 0,1%) avez un temps de fermentation de 7h30 pour atteindre un pH de décaillage de 4,7. La température de fermentation est de 37°C. Il n'y a pas d'influence notable de la gomme d'*acacia* sur le temps de fermentation.

*Décaillage - refroidissement :* Le décaillage s'effectue en cuve sous agitation et les produits sont ensuite lissés sur filtre 500µm au cours du refroidissement.

### • Suivi des produits dans le temps :

L'étude de la viscosité des 5 produits a été réalisée grâce à un viscosimètre dont les caractéristiques sont les suivantes :
- Matériel utilisé : MCR 300 (Anton Paar)
- Géométrie : ME-21
- Température : 10 °C
- Logiciel : US200/32 V2.43 (Physica)

Les résultats sont présentés dans le tableau suivant :

**(Tableau II: suivi de la viscosité-stabilité des produits)**

| | Viscosité à 64 s⁻¹, 10 s (mPa.s) | | | |
|---|---|---|---|---|
| Produits | J + 0 | J + 1 | J + 3 | J + 7 |
| Témoin | 1421 | 1438 | 1435 | 1541 |
| Acacia 1,5 | 1480 | 1617 | 1554 | 1748 |
| Acacia 2,0 | 809 | 877 | 921 | 923 |
| Acacia 3,0 | 114 | 115 | 63 | 64 |
| Acacia 5,0 | 51 | 57 | 36 | 48 |

Plus la dose d'*acacia* est élevée et moins le gel protéique est constitué et ferme.

Au lissage (J+0) les viscosités des produits contenant plus de 1,5% d'*acacia* sont faibles. En effet, le produit contenant 2% d'*acacia* possède une viscosité 40% inférieure à celle du témoin et les produits contenant 3% et 5% ont respectivement un écart de viscosité de 90% et 95% par rapport au témoin. (*Tableau II*)

De plus, un gradient de densité est visible sur les produits contenant 3% et 5% d'*acacia.* La phase inférieure plus épaisse qui représente 38% et 15% du volume total pour les produits à 3% et 5% d'*acacia* respectivement, semble constituée par un agrégat d'une partie des protéines. La proportion de la phase inférieure est évaluée par un homme du métier en faisant le rapport de la hauteur de la phase inférieure sur la hauteur totale du produit.

Après 20 à 25 jours de stockage, une décantation du produit a lieu et le produit présente un taux de phase liquide séparée supérieur à 5 % en poids par rapport au poids total du produit.

### Conclusion :

L'ajout direct de gomme d'*acacia* au-delà de 1,5%, avant traitement thermique empêche un développement correct du réseau protéique lors de la fermentation. La conséquence directe est une perte de viscosité très importante.

De plus, les produits ne sont pas stables dans le temps et une séparation de phase est visible à J+7 sur les produits contenant 3% et 5% de gomme d'*acacia.*

L'ajout d'une dose de gomme d'*acacia* supérieure à 1,5% avant fermentation ne permet pas d'obtenir des produits corrects au niveau de la texture et de la stabilité.

En revanche, des études ont montré qu'en ajoutant de la gomme d'*acacia* jusqu'à 1,5% avant la fermentation et entre 3 et 10% après la fermentation, le produit reste stable et présente des propriétés organoleptiques acceptables.

## Revendications

1. Utilisation de gomme *d'acacia,* notamment *acacia senegal,* pour la préparation d'un produit fermenté stable à base de lait ou à base de soja, ladite gomme étant utilisée à une concentration de 3% à 10 %, en particulier de 5 à 9 % en poids, par rapport au poids total du produit fermenté contenant la gomme *d'acacia* et étant ajoutée après la fermentation dudit produit.

2. Procédé de préparation d'un produit fermenté stable à base de lait ou à base de soja, contenant de la gomme *d'acacia,* notamment *acacia senegal,* ledit procédé comprenant une étape d'incorporation dans un produit fermenté à base de lait ou à base de soja, de 10 à 30 % en poids d'une solution aqueuse concentrée de gomme *d'acacia senegal,* par rapport au poids total du produit fermenté contenant la gomme *d'acacia*; ladite solution aqueuse concentrée de gomme *d'acacia senegal* contenant de 30 à 50 % de gomme *d'acacia* par rapport au poids total de la solution;
ledit produit fermenté à base de lait ou à base de soja étant obtenu par une fermentation d'un produit initial à base de lait ou à base de soja, ledit produit initial à base de lait ou à base de soja étant préalablement ensemencé par des ferments.

3. Procédé selon la revendication 2, comprenant une étape supplémentaire d'incorporation d'une partie de la gomme *d'acacia senegal* sous forme de poudre dans le produit initial à base de lait ou à base de soja, cette étape d'incorporation ayant lieu avant la fermentation, la partie de la gomme *d'acacia* incorporée avant la fermentation représentant au plus 1,5 % du poids total du produit fermenté contenant la gomme *d'acacia.*

4. Procédé selon l'une quelconque des revendications 2 ou 3, dans lequel la solution aqueuse concentrée de gomme *d'acacia senegal* présente une teneur en gomme *d'acacia senegal* de 30 à 50 %, plus particulièrement de 40 à 50 %, et notamment de 42 à 47 %, et encore plus particulièrement de 45% par rapport au poids total de la susdite solution aqueuse concentrée.

5. Procédé selon l'une quelconque des revendications 2 à 4, dans lequel la solution aqueuse concentrée de gomme *d'acacia senegal* est préparée par mélange de gomme *d'acacia* dans un milieu aqueux, choisi notamment parmi l'eau, les jus de fruits, les jus végétaux, suivi d'un traitement destiné à l'élimination des contaminants bactériologiques, notamment un traitement thermique par chauffage à 95 °C pendant 5 à 10 minutes.

6. Procédé de préparation d'un produit fermenté stable selon l'une quelconque des revendications 2 à 5, comprenant :
- une étape de préparation d'un produit fermenté à base de lait ou à base de soja, obtenu par une fermentation d'un produit initial à base de lait ou à base de soja, ledit produit initial à base de lait ou à base de soja étant préalablement ensemencé par des ferments,
- une étape d'incorporation, dans le produit fermenté à base de lait ou à base de soja obtenu précédemment, de 10 à 30 % en poids d'une solution aqueuse concentrée de gomme *d'acacia senegal,* par rapport au poids total du produit fermenté contenant la gomme *d'acacia ;*
ladite solution aqueuse concentrée de gomme *d'acacia senegal* contenant de 30 à 50 % de gomme *d'acacia* par rapport au poids total de la solution et étant obtenue par mélange de gomme *d'acacia* dans un milieu aqueux, choisi notamment parmi l'eau, les jus de fruits, les jus végétaux, suivi d'un traitement destiné à l'élimination des contaminants bactériologiques, notamment un traitement thermique, de ladite solution aqueuse concentrée.

7. Procédé de préparation d'un produit fermenté stable selon l'une quelconque des revendications 2 à 6, comprenant :
- une étape de préparation d'une solution aqueuse concentrée de gomme *d'acacia senegal* par mélange de gomme *d'acacia* dans un milieu aqueux, choisi notamment parmi l'eau, les jus de fruits, les jus végétaux, suivi d'un traitement thermique de ladite solution aqueuse concentrée par chauffage à 95 °C pendant 5 à 10 minutes, ladite solution ayant une teneur en gomme *d'acacia senegal* de 30 à 50 %, plus particulièrement de 40 à 50 %, et notamment de 42 à 47 %, et encore plus particulièrement de 45 % par rapport au poids total de la sus dite solution aqueuse concentrée,
- une étape de préparation d'un produit fermenté à base de lait ou à base de soja, obtenu par une fermentation d'un produit initial à base de lait ou à base de soja, ledit produit initial à base de lait ou à base de soja, étant préalablement ensemencé par des ferments, composés notamment d'une ou plusieurs souches *de Streptococcus spp.,* de *Lactobacillus spp.,* notamment *L. bulgaricus, L. acidophilus, L. reuteri, L. plantarum* et *L. casei,* de *Lactococcus spp.,* notamment *L. lactis subsp. cremoris* et de *Bifidobacterium spp.,* notamment *B. animalis ssp lactis, B. longum* et *B. breve ;*
l'ordre des étapes respectives de préparation de la solution aqueuse concentrée de gomme *d'acacia* et de préparation du produit fermenté à base de lait ou à base de soja, étant indifférente, et
- une étape d'incorporation dans le produit fermenté à base de lait ou à base de soja obtenu précédemment, de 10 à 30 % en poids de ladite solution aqueuse concentrée de gomme *d'acacia senegal,* par rapport au poids total du produit fermenté contenant la gomme *d'acacia.*

8. Procédé de préparation d'un produit fermenté stable selon l'une quelconque des revendications 2 à 7, comprenant :
- une étape de préparation d'une solution aqueuse concentrée de gomme *d'acacia senegal* par mélange de gomme *d'acacia* dans un milieu aqueux, choisi notamment parmi l'eau, les jus de fruits, les jus végétaux, suivi d'un traitement thermique de ladite solution aqueuse concentrée par chauffage à 95 °C pendant 5 à 10 minutes, ladite solution ayant une teneur en gomme *d'acacia senegal* de 30 à 50 %, plus particulièrement de 40 à 50 %, et notamment de 42 à 47 %, et encore plus particulièrement de 45 % par rapport au poids total de la sus dite solution aqueuse concentrée,
- une étape de préparation d'un produit à base de lait ou à base de soja non fermenté contenant de la gomme *d'acacia,* par incorporation d'une partie de la gomme *d'acacia senegal* sous forme de poudre dans un produit initial à base de lait ou à base de soja, cette étape d'incorporation ayant lieu avant la fermentation du sus dit produit initial, la partie de la gomme *d'acacia* incorporée avant la fermentation représentant au plus 1,5 % du poids total du produit fermenté contenant la gomme *d'acacia;*
- une étape de fermentation du produit obtenu à l'étape précédente par ensemencement préalable par des ferments, et
- une étape d'incorporation dans le produit fermenté à base de lait ou à base de soja obtenu précédemment, de 10 à 30 % en poids de ladite solution aqueuse concentrée de gomme *d'acacia senegal,* par rapport au poids total du produit fermenté contenant la gomme *d'acacia.*

9. Produit fermenté stable à base de lait ou à base de soja, susceptible d'être obtenu par le procédé, selon l'une quelconque des revendications 2 à 8 contenant de la gomme *d'acacia,* notamment *acacia senegal,* à une concentration de 3% à 10 %, en particulier de 5 à 9 % en poids, par rapport au poids total du produit fermenté contenant la gomme *d'acacia.*

10. Produit selon la revendication 9, se présentant sous la forme d'un produit à base de lait fermenté brassé ou brassé aux fruits ou brassé à boire ou brassé allégé ou d'un produit fermenté à base de lait et contenant du soja, ou d'un produit fermenté à base de soja.

11. Produit selon l'une quelconque des revendications 9 ou 10, présentant une viscosité inférieure à 2000 mPa.s, notamment inférieure à 1500 mPa.s, et notamment inférieure à 600 mPa.s, ladite viscosité étant notamment mesurée à une température de 10°C et à un cisaillement de 64 s⁻¹.

12. Produit selon l'une quelconque des revendications 9 à 11, dans lequel le taux de matière grasse est de 0 à 8 %, en particulier de 3 à 5 %, plus particulièrement de 3,2 % en poids, par rapport au poids total du produit fermenté contenant la gomme *d'acacia.*

13. Produit selon l'une quelconque des revendications 9 à 12, dans lequel le taux de la phase liquide séparée est inférieur à 5 %, plus particulièrement inférieur à 3 %, encore plus particulièrement inférieur à 1 % en poids, par rapport au poids total du produit.

## Claims

1. The use of *acacia* gum, especially *acacia senegal,* for preparing a milk-based or soya-based stable fermented product with said gum being used at a concentration ranging from 3 to 10%, in particular from 5 to 9% by weight, based on total weight of the fermented product containing the *acacia* gum and being added subsequent to fermentation of said product.

2. A process for preparing a milk-based or soya-based stable fermented product; containing *acacia* gum, especially *acacia senegal,* said process comprising a step of incorporating within a milk-based or soya-based fermented product, from 10 to 30% by weight of a concentrated aqueous solution of *acacia senegal* gum, based on total weight of the fermented product containing the *acacia* gum, said concentrated aqueous solution of *acacia senegal* gum containing from 30 to 50% of *acacia* gum based on the total weight of the solution;
said milk-based or soya-based fermented product being obtained through fermenting a milk-based or soya-based initial product, said milk-based or soya-based initial product being seeded beforehand with a starter culture.

3. A process according to claim 2, comprising an additional step of incorporating a portion of the *acacia senegal* gum in powder form into the milk-based or soya-based initial product, such an incorporation step being carried out prior to fermentation, the portion of *acacia* gum incorporated prior to fermentation representing at most 1.5% of the total weight of the fermented product containing the *acacia* gum.

4. A process according to anyone of claims 2 or 3, wherein the concentrated aqueous solution of *acacia senegal* gum has a content of *acacia senegal* gum from 30 to 50%, more particularly from 40 to 50%, more particularly from 42 to 47% and even more particularly 45% based on total weight of said concentrated aqueous solution mentioned above.

5. A process according to anyone of claims 2 to 4, wherein the concentrated aqueous solution of *acacia senegal* gum is prepared by mixing *acacia* gum into an aqueous medium, especially selected among water, fruit juices, plant juices, followed by a treatment intended to remove bacterial contaminants, especially a heat treatment at 95°C for 5 to 10 minutes.

6. A process for preparing a stable fermented product according to anyone of claims 2 to 5, comprising :
- a preparation step of a milk-based or soya-based fermented product, obtained by fermentation of a milk-based or soya-based initial product, said milk-based or soya-based initial product being seeded beforehand with a starter culture,
- an incorporation step, into the milk-based or soya-based fermented product previously obtained, of 10 to 30% by weight of a concentrated aqueous solution of *acacia senegal* gum, based on total weight of fermented product containing the *acacia* gum;
said concentrated aqueous solution of *acacia senegal* gum containing from 30 to 50% of *acacia* gum based on total weight of the solution and being obtained by mixing *acacia* gum into an aqueous medium, especially selected among water, fruit juices, plant juices, followed by a treatment intended to remove bacterial contaminants, especially a heat treatment, of said concentrated aqueous solution.

7. A process for preparing a stable fermented product according to anyone of claims 2 to 6, comprising :
- a preparation step of a concentrated aqueous solution of *acacia senegal* gum by mixing *acacia* gum into an aqueous medium, especially selected among water, fruit juices, plant juices, followed by a heat treatment of said concentrated aqueous solution by heating at 95°C for 5 to 10 minutes, said solution having a content of *acacia senegal* gum of 30 to 50%, more particularly of 40 to 50%, and more particularly of 42 to 47%, and even more particularly of 45% based on total weight of said previous concentrated aqueous solution.
- a preparation step of a milk-based or soya-based fermented product, obtained through fermentation of a milk-based or soya-based initial product, said milk-based or soya-based initial product, being seeded beforehand by a starter culture, especially composed of one or more strains of *Streptococcus spp.,* of *Lactobacillus spp.,* especially *L. bulgaricus, L. acidophilus, L. reuteri, L. plantarum* and *L. casei,* of *Lactococcus spp.,* especially *L. lactis subsp. cremoris* and of *Bifidobacterium spp.,* especially *B. animalis ssp lactis, B. longum* and *B. breve ;*
the order of these respective preparation steps of the concentrated aqueous solution of *acacia* gum and of preparation of the milk-based or soya-based fermented product, being irrelevant, and
- an incorporation step into the previously obtained milk-based or soya-based fermented product, of 10 to 30% by weight of said concentrated aqueous solution of *acacia senegal* gum, based on total weight of the fermented product containing the *acacia* gum.

8. A process for preparing a stable fermented product according to anyone of claims 2 to 7, comprising :
- a preparation step of a concentrated aqueous solution of *acacia senegal* gum by mixing *acacia* gum into an aqueous medium, especially selected among water, fruit juices, plant juices, followed by a heat treatment of said concentrated aqueous solution by heating at 95°C for 5 to 10 minutes, said solution having a content of *acacia senegal* gum of 30 to 50%, more particularly of 40 to 50%, and more particularly of 42 to 47%, and even more particularly of 45% based on total weight of said concentrated aqueous solution mentioned above,
- a preparation step of a milk-based or soya-based non fermented product containing *acacia* gum, through incorporation of a portion of the *acacia senegal* gum in powder form into a milk-based or soya-based initial product; such an incorporation step being carried out prior to fermentation of said initial product mentioned above, the portion of *acacia* gum incorporated prior to fermentation accounting at most for 1.5% of the total weight of the fermented product containing the *acacia* gum;
- a fermentation step of the product obtained through the previous step by seeding beforehand with a starter culture, and
- an incorporation step into the milk-based or soya-based fermented product previously obtained of 10 to 30% by weight of said concentrated aqueous solution of *acacia senegal* gum, based on total weight of the fermented product containing the *acacia* gum.

9. A stable milk-based or soya-based fermented product, liable to be obtained by the process according to anyone of claims 2 to 8, containing *acacia* gum, especially *acacia senegal* gum, at a concentration of 3 to 10%, in particular of 5 to 9% by weight, based on total weight of the fermented product containing the *acacia* gum.

10. A product according to claim 9, formulated in the form of a stirred fermented milk-based product or a stirred fruit product or a stirred yoghurt drink or a stirred low fat product or a milk-based fermented product containing soya or a soya-based fermented product.

11. A product according to anyone of claims 9 or 10, having a viscosity lower than 2000 mPa.s, especially lower than 1500 mPa.s, more particularly lower than 600 mPa.s, said viscosity being especially measured at a temperature of 10°C and a shear rate of 64 s⁻¹.

12. A product according to anyone of claims 9 to 11, wherein the fat content ranges from 0 to 8%, in particular from 3 to 5%, more particularly is 3.2% by weight, based on total weight of the fermented product containing the *acacia* gum.

13. A product according to anyone of claims 9 to 12, wherein the level of milk serum exudate layer is lower than 5%, in particular lower than 3%, more particularly lower than 1%, based on total weight of the product.

## Patentansprüche

1. Verwendung von Akaziengummi, insbesondere von *Acacia senegal,* zum Herstellen eines stabilen fermentierten Produkts auf Milchbasis oder Sojabasis, wobei das Gummi in einer Konzentration von 3 Gew.-% bis 10 Gew.-%, insbesondere von 5 Gew.-% bis 9 Gew.-%, bezogen auf das Gesamtgewicht des fermentierten Produkts, das das Akaziengummi enthält, verwendet wird und wobei es nach dem Fermentieren des Produkts zugegeben wird.

2. Verfahren zum Herstellen eines stabilen fermentierten Produkts auf Milchbasis oder auf Sojabasis, das Akaziengummi, insbesondere *Acacia senegal,* enthält, wobei das Verfahren einen Schritt zum Inkorporieren in ein fermentiertes Produkt auf Milchbasis oder auf Sojabasis von 10 bis 30 Gew.-% einer konzentrierten wässrigen Lösung aus *Acacia senegal* umfasst, bezogen auf das Gesamtgewicht des fermentierten Produkts, das das Akaziengummi enthält; wobei die konzentrierte wässrige Lösung aus *Acacia-senegal*-Gummi 30 bis 50 % Akaziengummi enthält, bezogen auf das Gesamtgewicht der Lösung;
wobei das fermentierte Produkt auf Milchbasis oder auf Sojabasis durch Fermentieren eines Ausgangsprodukts auf Milchbasis oder auf Sojabasis erhalten wird, wobei das Ausgangsprodukt auf Milchbasis oder auf Sojabasis vorher mit Fermenten geimpft wird.

3. Verfahren nach Anspruch 2, das einen zusätzlichen Schritt zum Inkorporieren eines Teils des *Acacia-senegal*-Gummis in Pulverform in das Ausgangsprodukt auf Milchbasis oder auf Sojabasis umfasst, wobei dieser Schritt zum Inkorporieren vor dem Fermentieren stattfindet, wobei der Teil des vor dem Fermentieren inkorporierten Akaziengummis höchstens 1,5 % des Gesamtgewichts des fermentierten Produkts, das das Akaziengummi enthält, darstellt.

4. Verfahren nach einem der Ansprüche 2 oder 3, wobei die konzentrierte wässrige Lösung aus *Acacia-senegal*-Gummi einen Gehalt an *Acacia-senegal*-Gummi von 30 bis 50 %, bevorzugt von 40 bis 50 % und insbesondere von 42 bis 47 %, und noch stärker bevorzugt 45 % aufweist, bezogen auf das Gesamtgewicht der konzentrierten wässrigen Lösung.

5. Verfahren nach einem der Ansprüche 2 bis 4, wobei die konzentrierte wässrige Lösung aus *Acacia-senegal-*Gummi durch Mischen von *Akaziengummi mit einem wässrigen Medium,* insbesondere ausgewählt aus Wasser, Fruchtsäften, Pflanzensäften, gefolgt von einer Behandlung, die zur Entfernung von Bakterienkontamination dient, insbesondere einer Wärmebehandlung durch Erhitzen auf 95 °C für 5 bis 10 Minuten, hergestellt wird.

6. Verfahren zum Herstellen eines stabilen fermentierten Produkts nach einem der Ansprüche 2 bis 5, umfassend:
- einen Schritt zum Herstellen eines fermentierten Produkts auf Milchbasis oder auf Sojabasis, das durch Fermentieren eines Ausgangsprodukts auf Milchbasis oder auf Sojabasis erhalten wird, wobei das Ausgangsprodukt auf Milchbasis oder auf Sojabasis vorher mit Fermenten geimpft wird.
- einen Schritt zum Inkorporieren in das vorher erhaltene fermentierte Produkt auf Milchbasis oder auf Sojabasis von 10 bis 30 Ges.-% einer konzentrierten wässrigen Lösung aus *Acacia-senegal*-Gummi*,* bezogen auf das Gesamtgewicht des fermentierten Produkts, dass das Akaziengummi enthält;
wobei die konzentrierte wässrige Lösung aus *Acacia-senegal*-Gummi 30 bis 50 % Akaziengummi enthält, bezogen auf das Gesamtgewicht der Lösung, und durch Mischen von Akaziengummi mit einem wässrigen Medium, insbesondere ausgewählt aus Wasser, Fruchtsäften, Pflanzensäften, gefolgt von einer Behandlung, die zum Entfernen von Bakterienkontamination dient, insbesondere einer Wärmebehandlung, der konzentrierten wässrigen Lösung erhalten wird.

7. Verfahren zum Herstellen eines stabilen fermentierten Produkts nach einem der Ansprüche 2 bis 6, umfassend:
- einen Schritt zum Herstellen einer konzentrierten wässrigen Lösung aus *Acacia-senegal*-Gummi durch Mischen von Akaziengummi mit einem wässrigen Medium, insbesondere ausgewählt aus Wasser, Fruchtsäften, Pflanzensäften, gefolgt von einer Wärmebehandlung der konzentrierten wässrigen Lösung durch Erhitzen auf 95 °C für 5 bis 10 Minuten, wobei die Lösung einen Gehalt an *Acacia-senegal-*Gummi von 30 bis 50 %, bevorzugt von 40 bis 50 % und insbesondere von 42 bis 47 % und noch stärker bevorzugt von 45 % aufweist, bezogen auf das Gesamtgewicht der konzentrierten wässrigen Lösung,
- einen Schritt zum Herstellen eines fermentierten Produkts auf Milchbasis oder auf Sojabasis, erhalten durch Fermentieren eines Ausgangsprodukts auf Milchbasis oder auf Sojabasis, wobei das Ausgangsprodukt auf Milchbasis oder auf Sojabasis vorher mit Fermenten geimpft wurde, die insbesondere aus einem oder mehreren Stämmen von *Streptococcus spp., Lactobacillus spp.,* insbesondere *L. bulgaricus, L. acidophilus, L. reuteri, L. plantarum* und *L. casei, Lactococcus spp.*, insbesondere *L. lactis subsp. cremoris* und *Bifidobacterium spp.,* insbesondere *B. animalis ssp lactis, B. longum* und *B. breve* bestehen; wobei die Reihenfolge der jeweiligen Schritte zum Herstellen der konzentrierten wässrigen Lösung aus Akaziengummi und zum Herstellen des fermentierten Produkts auf Milchbasis oder auf Sojabasis egal ist, und
- einen Schritt zum Inkorporieren in das vorher erhaltene fermentierte Produkt auf Milchbasis oder auf Sojabasis von 10 bis 30 Gew.-% der konzentrierten wässrigen Lösung aus *Acacia-senegal-*Gummi, bezogen auf das Gesamtgewicht des fermentierten Produkts, dass das Akaziengummi enthält.

8. Verfahren zum Herstellen eines stabilen fermentierten Produkts nach einem der Ansprüche 2 bis 7, umfassend:
- einen Schritt zum Herstellen einer konzentrierten wässrigen Lösung aus *Acacia-senegal*-Gummi durch Mischen von Akaziengummi mit einem wässrigen Medium, insbesondere ausgewählt aus Wasser, Fruchtsäften, Pflanzensäften, gefolgt von einer Wärmebehandlung der konzentrierten wässrigen Lösung durch Erhitzen auf 95 °C für 5 bis 10 Minuten, wobei die Lösung einen Gehalt an *Acacia-senegal-*Gummi von 30 bis 50 %, bevorzugt von 40 bis 50 % und insbesondere von 42 bis 47 % und noch stärker bevorzugt von 45 % aufweist, bezogen auf das Gesamtgewicht der konzentrierten wässrigen Lösung,
- einen Schritt zum Herstellen eines nicht fermentierten Produkts auf Milchbasis oder auf Sojabasis, das Akaziengummi enthält, durch Inkorporieren eines Teils des *Acacia-senegal*-Gummis in Pulverform in ein Ausgangsprodukt auf Milchbasis oder auf Sojabasis, wobei der Schritt zum Inkorporieren vor dem Fermentieren des Ausgangsprodukts stattfindet, wobei der Teil des vor dem Fermentieren inkorporierten Akaziengummis höchstens 1,5 % des Gesamtgewichts des fermentierten Produkts, das das Akaziengummi enthält, darstellt;
- einen Schritt zum Fermentieren des im vorherigen Schritt erhaltenen Produkts durch vorausgehendes Impfen mit Fermenten, und
- einen Schritt zum Inkorporieren in das vorher erhaltene fermentierte Produkt auf Milchbasis oder auf Sojabasis von 10 bis 30 Gew.-% der konzentrierten wässrigen Lösung aus *Acacia-senegal-*Gummi, bezogen auf das Gesamtgewicht des fermentierten Produkts, dass das Akaziengummi enthält.

9. Stabiles fermentiertes Produkt auf Milchbasis oder auf Sojabasis, das durch das Verfahren nach einem der Ansprüche 2 bis 8 erhalten werden kann, das Akaziengummi enthält, insbesondere *Acacia senegal,* in einer Konzentration von 3 Gew.-% bis 10 Gew.-% insbesondere 5 Gew.-% bis 9 Ges.-%, bezogen auf das Gesamtgewicht des fermentierten Produkts, das das Akaziengummi enthält.

10. Produkt nach Anspruch 9, das die Form eines gerührten fermentierten Produkts auf Milchbasis oder eines gerührten Produkts mit Früchten oder eines gerührten Produkts zum Trinken oder eines gerührten fettreduzierten Produkts oder eines fermentierten Produkts auf Milchbasis, das auch Soja enthält, oder eines fermentierten Produkts auf Sojabasis aufweisen kann.

11. Produkt nach einem der Ansprüche 9 oder 10, das eine Viskosität von weniger als 2.000 mPa.s, insbesondere weniger als 1.500 mPa.s und bevorzugt weniger als 600 mPa.s aufweist, wobei die Viskosität insbesondere bei einer Temperatur von 10 °C und bei einer Scherrate von 64 s⁻¹ gemessen wird.

12. Produkt nach einem der Ansprüche 9 bis 11, wobei der Fettanteil 0 bis 8 Ges.-%, bevorzugt 3 bis 5 Gew.-%, insbesondere 3,2 Gew.-% beträgt, bezogen auf das Gesamtgewicht des fermentierten Produkts, das das Akaziengummi enthält.

13. Produkt nach einem der Ansprüche 9 bis 12, wobei der Anteil an abgetrennter flüssiger Phase kleiner als 5 Ges.-%, bevorzugt kleiner als 3 Gew.-% und stärker bevorzugt kleiner als 1 Ges.-% ist, bezogen auf das Gesamtgewicht des Produkts.
